# EUROPÄISCHE PATENTSCHRIFT

(11) **EP 1 399 516 B1**
(45) Veröffentlichungstag und Bekanntmachung des Hinweises auf die Patenterteilung: **27.08.2008**
(21) Anmeldenummer: 02750915.7
(22) Anmeldetag: 11.05.2002
(51) Int. Cl.: C09D 175/04, B05D 7/00

(54) **INTEGRIERTES VERFAHREN ZUR REPARATUR FARB- UND/ODER EFFEKTGEBENDER MEHRSCHICHTLACKIERUNGEN**
INTEGRATED METHOD FOR REPAIRING MULITLAYERED COLORED AND/OR EFFECT-PRODUCING PAINT COATINGS
PROCEDE INTEGRE POUR RETOUCHER DES PEINTURES MULTICOUCHES COLORANTES ET/OU A EFFETS

(30) Priorität: 18.05.2001 DE 10124277
(43) Veröffentlichungstag der Anmeldung: 24.03.2004
(73) Patentinhaber: BASF Coatings AG, 48165 Münster (DE)
(72) Erfinder: ZARSE, Nicola, 48165 Münster (DE); WIGGER, Georg, 48308 Senden (DE); RATZ, Roland, 48351 Everswinkel (DE)
(74) Vertreter: Leifert & Steffan
(86) Internationale Anmeldenummer: PCT/EP2002/005198
(87) Internationale Veröffentlichungsnummer: WO 2002/094955

(56) Entgegenhaltungen:
- DE-A- 10 004 499
- DE-A- 19 750 451
- DE-A- 19 914 896
- US-A- 5 368 944

## Beschreibung

Die vorliegende Erfindung betrifft ein neues Verfahren zur Reparatur farb-und/oder effektgebender Mehrschichtlackierungen. Außerdem betrifft die vorliegende Erfindung die farb- und/oder effektgebenden Mehrschichtlackierungen, die mit Hilfe des neuen Verfahrens repariert wurden.

Integrierte Naß-in-naß-Verfahren zur Herstellung von farb- und/oder effektgebenden Mehrschichtlackierungen, die mindestens eine Funktionsschicht mindestens eine farb- und/oder effektgebende Basislackierung und mindestens eine Klarlackierung enthalten, sind aus dem europäischen Patent EP 0 788 523 B1 bekannt.

Bei den Verfahren
(1) appliziert man wäßrige Füller auf grundierte oder ungrundierte Substrate,
(2) wonach man die resultierenden Füllerschichten (1), ohne sie vollständig zu härten, trocknet,
(3) beschichtet man die getrockneten Füllerschichten (2) mit Wasserbasislacken,
(4) wonach man die resultierenden Wasserbasislackschichten (3), ohne sie vollständig zu härten, trocknet, und
(5) beschichtet man die getrockneten Wasserbasislackschichten (4) mit Klarlacken,
(6) wonach man die Schichten (2) und (4) sowie die Klarlackschichten (5) gemeinsam härtet, wodurch die Funktionsschichten, die farb-und/oder effektgebenden Basislackierungen und die Klarlackierungen resultieren.

Die hierbei verwendeten wäßrigen Beschichtungsstoffe sind physikalisch härtbar und enthalten als Bindemittel ein wasserverdünnbares Polyurethanharz. Die wäßrigen Beschichtungsstoffe enthalten desweiteren Pigmente und/oder Füllstoffe, wobei das Verhältnis von Bindemittel zu Pigment zwischen 0,5:1 und 1,5:1 liegt.

Die bekannten wäßrigen Beschichtungsstoffe gestatten die Herstellung besonders dünner Füllerlackierungen, Steinschlagschutzgrundierungen oder Funktionsschichten, ohne daß ein Verlust der Steinschlagbeständigkeit oder eine Verschlechterung der Abdeckung der Unebenheiten des grundierten Substrats eintreten. Das bekannte integrierte Naß-in-naß-Verfahren ist daher wirtschaftlich und ökologisch besonders günstig.

Wenn die bekannten farb- und/oder effektgebenden Mehrschichtlackierungen, die sich beispielsweise auf einer Automobilkarosserie befinden, in der Linie teilweise oder ganz repariert werden müssen, treten Probleme auf. So entwickelt sich der Farbton der Basislackierung bei der Applikation auf eingebrannten Füllerlackierungen anders als bei der Applikation auf "nur" vorgetrockneten Füllerschichten. Daher muß bei der Reparaturlackierung der Füller wieder mit lackiert werden, um den Farbton der Originallackierung zu treffen.

Insgesamt resultiert der folgenden Mehrschichtaufbau:

### Originallackierung:

- Grundierung (üblicherweise eine kathodisch abgeschiedene und eingebrannte Elektrotauchlackierung),
- Füllerlackierung,
- Basislackierung und
- Klarlackierung sowie

### Reparaturlackierung:

- Füllerlackierung,
- Basislackierung und
- Klarlackierung.

Im Vergleich zum Standardprozeß, bei dem der Füller vor der Applikation des Wasserbasislacks bei höheren Temperaturen vollständig vernetzt wird (vgl. die deutsche Patentanmeldung DE 199 30 552 A1), muß daher eine zusätzliche Schicht appliziert werden, was die Reparatur des integrierten Naß-in-naß-Verfahrens technisch aufwendig und daher fehleranfälliger und teurer macht.

Demgegenüber bewirkt der Standardprozeß keine Farbtonabweichung zwischen der Basislackierung der Originallackierung und der Basislackierung der Reparaturlackierung. Allerdings erfordert der Standardprozeß einen zusätzlichen Einbrennschritt, was zu einem zusätzlichen Energieverbrauch führt und zusätzliche Anlagen wie Umluftöfen erfordert.

Da aber das bekannte integrierte Naß-in-naß-Verfahren zur Herstellung farb- und/oder effektgebender Mehrschichtlacklerungen zahlreiche technische und wirtschaftliche Vorteile aufweist, wäre es wünschenswert, ein Verfahren zur Reparaturlacklerung zur Verfügung zu haben, das wie das Standardverfahren ohne die Applikation einer Füllerschicht auskommt

Aus den deutschen Patentanmeldungen DE 199 04 317 A1 und DE 198 55 125 A1 sind wäßrige Mehrkomponentensysteme auf der Basis von hydroxylgruppenhaltigen Polyurethanen und Polylsocyanaten bekannt. Außer den hydroxylgruppenhaltigen Polyurethanen oder anstelle von ihnen können noch zahlreiche weitere Bindemittel angewandt werden. Die Mehrkomponentensysteme werden vor allem für die Herstellung von Klarlackierungen verwendet.

Der deutsche Patentanmeldung DE 199 04 317 A1 lag die Aufgabe zugrunde, wäßrige Mehrkomponentensysteme bereitzustellen, die insbesondere bei längerer. Lagerung In geringerem Umfang oder gar nicht mehr von Mikroorganismen befallen und zerstört werden,

Der deutschen Patentanmeldung DE 198 155 125 A1 lag die Aufgabe zugrunde, wäßrige Mehrkomponentensysteme bereitzustellen, die leicht herstellbar, homogen, leicht handhabbar, lösemittelarm, kochersicher, spritzsicher und stabil bei forclerter Trocknung sind und welche matte beschichtungen liefern, die keine Oberflächendefekte und Grauschleier aufweisen, sondern witterungsstabil und benzinbeständig sind.

Aus der deutschen Patentanmeldung DE 197 50 451 A1 ist ein wäßriges Mehrkomponentensystem auf der Basis von hydroxylgruppenhaltigen Polyurethanen und Polyisocyanaten bekannt. Der Patentanmeldung lag die Aufgabe zugrunde, ohne Applikation eines Klarlackes auch unter den Bedingungen der Autoreparaturlackierung eine Beschichtung mit einem hohen Eigenschaftsniveau bezüglich Glanz, Härte, Kratzfestigkeit, Lösemittel- und Benzinbeständigkeit sowie Wasserfestigkeit bereitzustellen. Den deutschen Patentanmeldungen lassen sich daher keine Hinweise oder Anregungen entnehmen, die Mehrkomponentensysteme als Fuller im Rahmen eines Integrierten Naß-in-naß-Verfahrens einzusetzen, um bei der Reparaturlackierung der mit dem Verfahren hergestellten farb- und/oder effektgebenden Mehrschichtlackierung auch ohne zusätzliche Füllerlackierung eine Farbtonverschiebung der Basislackierung zu vermeiden.

Aufgabe der vorliegenden Erfindung ist es, ein neues integriertes Verfahren zur Reparatur farb- und/oder effektgebender Mehrschichtlackierungen zu finden, das
- die Vorteile des integrierten Naß-in-naß-Verfahrens zur Herstellung farb- und/oder effektgebender Mehrschichtlackierungen des Standes der Technik nach wie vor aufweist und das
- bei der Reparaturlackierung ohne die Applikation einer zusätzlichen Füllerschicht und
- bei der Herstellung der Originallackierung ohne einen zusätzlichen Einbrennschritt auskommt,
ohne daß eine Farbtonverschiebung und/oder Effektverschiebung der Basislackierung der Reparaturlackierung gegenüber der Basislackierung der Originallackierung eintritt.

Demgemäß wurde die neue Verwendung eines wäßrigen Zwei- oder Mehrkomponentensystems, enthaltend
(A) mindestens eine Bindemittelkomponente, enthaltend mindestens ein gesättigtes, ungesättigtes und/oder mit olefinisch ungesättigten Verbindungen gepfropftes, ionisch und/oder nichtionisch stabilisiertes Polyurethan, und
(B) mindestens eine Vernetzungsmitkelkomponente, enthaltend mindestens ein Polylsocyanat,
zur Verhinderung von Farbtonverschlebungen und/oder Effektverschiebungen zwischen der Basislackierung einer Originallackierung und der Basislackierung einer Reparaturlackierung bei der Reparatur einer farb- und/oder effektgebenden Mehrschichtlackierung gefunden.

Das Zwei- oder Mehrkomponentensystem wird zur Herstellung der Füllerlackierung oder Funktionsschicht der Originallackierung der farb-und/oder effektgebenden Mehrschichtlackierung verwendet.

Im folgenden wird die neue Verwendung eines Zwei- oder Mehrkomponentensystems, enthaltend mindestens eine Bindemittelkomponente (A) und mindestens eine Vernetzungsmittelkomponente (B) als "erfindungsgemäße Verwendung" bezeichnet.

Außerdem wurde das neue integrierte Verfahren zur Reparatur farb-und/oder effektgebender Mehrschichtlackierungen gefunden, bei dem
1. die Originallackierungen durch ein integriertes Naß-in-naß-Verfahren, bei dem man
   1.1 mindestens einen wäßrigen Füller auf ein grundiertes oder ungrundiertes Substrat appliziert,
   1.2 die resultierende(n) wäßrige(n) Füllerschicht(en) 1.1 trocknet,
   1.3 die getrocknete(n) Füllerschicht(en) 1.2 mit mindestens einem Wasserbasislack überschichtet,
   1.4 die resultierende(n) Wasserbasislackschicht(en) 1.3, ohne sie vollständig zu härten, trocknet und
   1.5 die getrocknete(n) Wasserbasislackschicht(en) 1.4 mit mindestens einem Klarlack überschichtet, wonach man
   1.6 die resultierende(n) Klarlackschicht(en) sowie 1.5 die Schichten 1.2 und 1.4 gemeinsam thermisch oder thermisch und mit aktinischer Strahlung härtet, wodurch die Funktionsschicht oder Füllerlackierung, die Basislackierung und die Klarlackierung der Originallackierungen resultieren;
   und
2. die Reparaturlackierungen durch ein integriertes Naß-in-naß-Verfahren, bei dem man
   2.1 mindestens einen Wasserbasislack auf die Originallackierungen appliziert,
   2.2 die Wasserbasislackschicht(en), ohne sie vollständig zu härten, trocknet,
   2.3 die getrocknete(n) Wasserbasislackschicht(en) 2.2 mit mindestens einem Klarlack überschichtet und
   2.4 die Klarlackschicht(en) 2.3 und die Wasserbasislackschicht(en) 2.2 gemeinsam thermisch oder thermisch und mit aktinischer Strahlung härtet, wodurch die Klarlackierung und die Basislackierung der Reparaturlackierung resultieren; hergestellt werden, dadurch gekennzeichnet, daß man mindestens einen wäßrigen Füller 1.1, enthaltend
      (A) mindestens eine Bindemittelkomponente, enthaltend mindestens ein gesättigtes, ungesättigtes und/oder mit olefinisch ungesättigten Verbindungen gepfropftes, ionisch und/oder nichtionisch stabilisiertes Polyurethan, und
      (B) mindestens eine Vernetzungsmittelkomponente, enthaltend mindestens ein Polyisocyanat,
verwendet.

Im folgenden wird das neue integrierte Verfahren zur Reparatur farb-und/oder effektgebender Mehrschichtlackierungen als "erfindungsgemäßes Verfahren" bezeichnet.

Außerdem wurden neuen reparierten farb- und/oder effektgebenden Mehrschichtlackierungen gefunden, die mit Hilfe des erfindungsgemäßen Verfahrens herstellbar sind und im folgenden als "erfindungsgemäße Mehrschichtlackierungen" bezeichnet werden.

Weitere erfindungsgemäße Gegenstände ergeben sich aus der Beschreibung.

Im Hinblick auf den Stand der Technik war es überraschend und für den Fachmann nicht vorhersehbar, daß die Aufgabe, die der vorliegenden Erfindung zugrundelag, mit Hilfe der erfindungsgemäßen Verwendung und des erfindungsgemäßen Verfahrens gelöst werden konnte. Insbesondere überraschte, daß die erfindungsgemäße Verwendung und das erfindungsgemäße Verfahren sowie die hiermit hergestellten erfindungsgemäßen Mehrschichtlackierungen nach wie vor alle wirtschaftlichen und technologischen Vorteile des Standes der Technik aufwiesen, ohne dessen Nachteile, wie zusätzliche Verfahrensschritte zur Verhinderung der Farbtonverschiebung und/oder der Effektverschiebung zwischen den Basislackierungen der Originallackierungen und den Basislackierungen der Reparaturlackierungen einerseits oder das Einbrennen von Füllerschichten im Rahmen der Herstellung der Originallackierungen andererseits, zu zeigen.

Bei dem erfindungsgemäßen Verfahren wird für die Herstellung der Funktionsschicht oder der Füllerlackierung im Rahmen der Originallackierung der farb- und/oder effektgebenden Mehrschichtlackierung mindestens ein, insbesondere ein, Zwei- oder Mehrkomponentensystem, insbesondere ein Zweikomponentensystem, eingesetzt.

Das Zweikomponentensystem ist thermisch oder thermisch und mit aktinischer Strahlung (Dual-Cure) härtbar. Für die Härtung mit aktinischer Strahlung können elektromagnetische Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, eingesetzt werden.

Das Zweikomponentensystem enthält eine Bindemittelkomponente (A), die als wesentlichen Bestandteil mindestens ein gesättigtes, ungesättigtes und/oder mit olefinisch ungesättigten Verbindungen gepfropftes, ionisch und/oder nichtionisch stabilisiertes Polyurethan als Bindemittel enthalten.

Polyurethane dieser Art sind an sich bekannt und werden beispielsweise in
- der deutschen Patentanmeldung DE 199 14 896 A1, Spalte 1,Zeilen 29 bis 49, Spalte 4, Zeile 23, bis Spalte 11, Zeile 5, und Spalte 19, Zeile 12, bis Spalte 20, Zeile 6,
- der deutschen Patentanmeldung DE 44 38 504 A1, Seite 2, Zeile 58, bis Seite 4, Zeile 40, i. V. m. Seite 5, Zeile 24, bis Seite 7, Zeile 33,
- der deutschen Patentanmeldung DE 199 04 624 A1, Seite 2, Zeile 35, bis Seite 5, Zeile 46, i. V. m. Seite 7, Zeile 36, bis Seite 8, Zeile 14,
- der deutschen Patentanmeldung DE 41 07 136 A1, Seite 2, Zeile 23, bis Seite 4, Zeile 35, i. V. m. Seite 5, Zeilen 23 bis 59,
- der deutschen Patentanmeldung DE 199 04 317 A1, Seite 9, Zeile 44, bis Seite 12, Zeile 11, i. V. m. Seite 16, Zeile 58, bis Seite 17, Zelle 2,

im Detail beschrieben. Ergänzend wird noch auf die eingangs zitierten deutschen Patentanmeldungen verwiesen.

Der Gehalt der Bindemittelkomponente (A) an den Polyurethanen kann sehr breit variieren und richtet sich nach den Erfordernissen des Einzelfalls. Vorzugsweise liegt der Gehalt bei 10 bis 80, bevorzugt 12 bis 75, besonders bevorzugt 14 bis 70, ganz besonders bevorzugt 16 bis 65 und insbesondere 16 bis 60 Gew.-%, jeweils bezogen auf den Festkörper der Bindemittellkomponente (A).

Die Vernetzungsmittelkomponente (B) enthält mindestens ein Polyisocyanat.

Die Polyisocyanate enthalten im statistischen Mitteln mindestens 2,0, bevorzugt mehr als 2,0 und insbesondere mehr als 2,5 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate sind isocyanatgruppenhaltige Polyurethanpräpolymere, die durch Reaktion von Polyolen mit einem Überschuß an Diisocyanaten hergestellt werden können und bevorzugt niederviskos sind.

Beispiele geeigneter Diisocyanate sind Isophorondiisocyanat (= 5-Isocyanato-1-isocyanatomethyl-1,3,3-trimethyl-cyclohexan), 5-lsocyanato-1-(2-isocyanatoeth-1-yl)-1,3,3-trimethyl-cyclohexan, 5-lsocyanato-1-(3-isocyanatoprop-1-yl)-1,3,3-trimethyl-cyclohexan, 5-lsocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.%, vorzugsweise 25 Gew.-% und insbesondere 20 Gew.-%, wie es den Patentanmeldungen DE 44 14 032 A1, GB 1220717 A1, DE 16 18 795 A1 oder DE 17 93 785 A1 beschrieben wird, bevorzugt Isophorondiisocyanat, 5-Isocyanato-1-(2-isocyanatoeth-1-yl)-1,3,3-trimethylcyclohexan, 5-Isocyanato-1-(3-isocyanatoprop-1-yl)-1,3,3-trimethylcyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan,- 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Harnstoff- Carbodiimid und/oder Uretdiongruppen aufweisende Polyisocyanate verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt oder sie werden in der nicht vorveröffentlichten deutschen Patentanmeldung DE 100 05 228.2 beschrieben.

Außerdem kommen die hochviskosen Polyisocyanate, wie sie in der deutschen Patentanmeldung DE 198 28 935 A1 beschrieben werden, oder die an ihrer Oberfläche durch Harnstoffbildung und/oder Blockierung desaktivierten Polyisocyanatspartikel gemäß den europäischen Patentanmeldungen EP 0 922 720 A1, EP 1 013 690 A1 und EP 1 029 879 A1 in Betracht.

Desweiteren kommen die in der deutschen Patentanmeldung DE 196 09 617 A1 beschriebenen Addukte von Polyisocyanaten mit isocyanatreaktiven funktionellen Gruppen enthaltenden Dioxanen, Dioxolanen und Oxazolidinen, die noch freie Isocyanatgruppen enthalten, als Polyisocyanate (B) in Betracht.

Der Gehalt der Vernetzungsmittelkomponente (B) an den Polyisocyanaten kann ebenfalls stark variieren. Er richtet sich vor allem nach ihrem Aggreagtzustand (flüssig oder fest), der ihre Mischbarkeit mit der Bindemittelkomponente (A) bestimmt. So empfiehlt es sich, feste oder hochviskose Poylisocyanate als Lösung in mindestens einem inerten organischen Lösemittel anzuwenden, um ihre Mischbarkeit mit der Bindemittelkomponente (A) zu verbessern. Vorzugsweise liegt der Gehalt der Vernetzungsmittelkomponente (B) an den Polyisocyanaten bei 10 bis 100, bevorzugt 15 bis 95, besonders bevorzugt 20 bis 90, ganz besonders bevorzugt 25 bis 85 und insbesondere 30 bis 80 Gew.-%, jeweils bezogen auf die Vernetzungsmittelkomponente (B).

Der Gehalt des Zweikomponentensystems an den Polyurethanen einerseits und den Polyisocyanaten andererseits kann ebenfalls sehr breit variieren. Er richtet sich insbesondere nach der Funktionalität, d.h. der Anzahl der isocyantreaktiven Gruppen in der Bindemittelkomponente (A), einerseits und nach der Funktionalität der Polyisocyanate in der Vernetzungsmittelkomponente (B) andererseits. Im allgemeinen empfiehlt es sich, den Gehalt so zu wählen, daß ein Verhältnis von Isocyanatgruppen zu isocyanatreaktiven Gruppen von 2 : 1 bis 1 : 2, bevorzugt 1,8 : 1 bis 1 : 1,8, besonders bevorzugt 1,6 : 1 bis 1 :1,6, ganz besonders bevorzugt 1,4 : 1 bis 1 : 1,4 und insbesondere 1,2 : 1 bis 1 : 1,2 resultiert.

Außer den vorstehend beschriebenen Polyurethanen und Polyisocyanaten können die Zweikomponentensysteme noch mindestens ein Pigment (C) enthalten. Die Pigmente (C) können über die Bindemittelkomponente (A) und/oder die Vernetzungsmittelkomponente (B) eingemischt werden. Vorzugsweise werden sie über die Bindemittelkomponente (A) eingemischt.

Bevorzugt werden die Pigmente (C) aus der Gruppe, bestehend aus farb-und/oder effektgebenden, fluoreszierenden, elektrisch leitfähigen und magnetisch abschirmenden Pigmenten, Metallpulvern, organischen und anorganischen, transparenten und opaken Füllstoffen und Nanopartikeln (zusammenfassend "Pigmente" genannt) ausgewählt.

Beispiele geeigneter Effektpigmente (C) sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP0 283 852 A1, EP 0 293 746 A1, EP 0 417 567 A1, US 4,828,826 A oder US 5,244,649 A verwiesen.

Beispiele für geeignete anorganische farbgebende Pigmente (C) sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente (C) sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Beispiele für fluoreszierende Pigmente (C) (Tagesleuchtpigmente) sind Bis(azomethin)-Pigmente.

Beispiele für geeignete elektrisch leitfähige Pigmente (C) sind Titandioxid/Zinnoxid-Pigmente.

Beispiele für magnetisch abschirmende Pigmente (C) sind Pigmente auf der Basis von Eisenoxiden oder Chromdioxid.

Beispiele für geeignete Metallpulver (C) sind Pulver aus Metallen und Metallegierungen Aluminium, Zink, Kupfer, Bronze oder Messing.

Beispiele geeigneter organischer und anorganischer Füllstoffe (C) sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit, Calciumsulfate oder Bariumsulfat zu verwenden, weil hierdurch die Viskosität und das Fließverhalten sehr gut eingestellt werden kann.

Beispiele geeigneter transparenter Füllstoffe (C) sind solche auf der Basis von Siliziumdioxid, Aluminiumoxid oder Zirkoniumoxid.

Geeignete Nanopartikel (C) werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil^{®} vertrieben. Ganz besonders bevorzugt werden auch gefällte Wassergläser, wie Nanohektorite, die beispielsweise von der Firma Südchemie unter der Marke Optigel^{®} oder von der Firma Laporte unter der Marke Laponite^{®} vertrieben werden, verwendet.

Der Gehalt der Zweikompontentensysteme an den Pigmenten (C) kann sehr breit variieren. Vorzugsweise wird der Gehalt so eingestellt, daß ein Pigment-Bindemittelverhältnis von 1 : 10 bis 5 : 1, bevorzugt 1 : 8 bis 4,5 : 1, besonders bevorzugt 1 : 6 bis 4 : 1, ganz besonders bevorzugt 1 : 4 bis 3,5 : 1 und insbesondere 1 : 2 bis 3 : 1 resultiert.

Anstelle der vorstehend beschriebenen Pigmente (C) oder zusätzlich zu diesen können die erfindungsgemäßen Pulver noch mindestens einen Zusatzstoffe (D) enthalten. Die Zusatzstoffe (D) können über die Bindemittelkomponente (A) und/oder die Vernetzungsmittelkomponente (B) eingemischt werden. Vorzugsweise werden sie über die Bindemittelkomponente (A) eingemischt.

Beispiele geeigneter Zusatzstoffe (D) sind physikalisch, thermisch, thermisch und mit aktinischer Strahlung und nur mit aktinischer Strahlung härtbare Bindemittel, die von den vorstehend beschriebenen Polyurethanen verschieden sind; von den vorstehend beschriebenen Polyisocyanaten verschiedene Vernetzungsmittel; molekulardispers lösliche Farbstoffe; Lichtschutzmittel, wie UV-Absorber und reversible Radikalfänger (HALS); Antioxidantien; niedrig- und hochsiedende ("lange") organische Lösemittel; Entlüftungsmittel; Netzmittel; Emulgatoren; Slipadditive; Polymerisationsinhibitoren; Katalysatoren für die thermische Vernetzung; thermolabile radikalische Initiatoren; Photoinitiatoren und - coinitiatoren; thermisch härtbare Reaktivverdünner; Haftvermittler; Verlaufmittel; filmbildende Hilfsmittel; Rheologiehilfsmittel (Verdicker); Flammschutzmittel; Korrosionsinhibitoren; Rieselhilfen; Wachse; Sikkative; Biozide und/oder Mattierungsmittel; wie sie beispielsweise in dem Lehrbuch »Lackadditive« von Johan Bieleman, Wiley-VCH, Weinheim, New York, 1998, oder in der deutschen Patentanmeldung DE 199 14 896 A1, Spalte 14, Seite 26, bis Spalte 15, Zeile 46, im Detail beschrieben werden. Ergänzend wird noch auf die eingangs zitierten deutschen Patentanmeldungen DE 199 04 317 A1 und DE 198 55 125 A1 verwiesen.

Methodisch weist die Herstellung der Bindemittelkomponenten (A) und der Vernetzungsmittelkomponenten (B) sowie der Zweikomponentensysteme hieraus keine Besonderheiten auf, sondern erfolgt mit Hilfe üblicher und bekannter Mischverfahren und Vorrichtungen wie Rührkessel, Rührwerksmühlen, Ultraturrax, In-line-Dissolver, statische Mischer, Zahnkranzdispergatoren, Druckentspannungsdüsen und/oder Microfluidizer.

Das erfindungsgemäße Verfahren geht aus von einem grundierten oder ungrundierten, insbesondere einem grundierten Substrat.

Als Substrate kommen all die in Betracht, deren Oberfläche durch die Anwendung von Hitze und/oder aktinischer Strahlung bei der Härtung der hierauf befindlichen Schichten nicht geschädigt wird. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Demnach ist das erfindungsgemäße Verfahren nicht nur für Anwendungen auf den Gebieten der Kraftfahrzeugserienlackierung und Kraftfahrzeugreparaturlackierung hervorragend geeignet, sondern kommen auch für die Beschichtung von Bauwerken im Innen- und Außenbereich und von Türen, Fenstern und Möbeln, für die industrielle Lackierung, inklusive Coil Coating, Container Coating und die Imprägnierung und/oder Beschichtung elektrotechnischer Bauteile, sowie für die Lackierung von weißer Ware, inclusive Haushaltsgeräte, Heizkessel und Radiatoren, in Betracht.

Im Rahmen der industriellen Lackierungen eignen sie sich für die Lackierung praktisch aller Teile und Gegenstände für den privaten oder industriellen Gebrauch wie Haushaltsgeräte, Kleinteile aus Metall, wie Schrauben und Muttern, Radkappen, Felgen, Emballagen, oder elektrotechnische Bauteile, wie Motorwicklungen oder Transformatorwicklungen.

Vorzugsweise wird das erfindungsgemäße Verfahren auf dem Gebiet der Kraftfahrzeuglackierung verwendet.

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht. Die kathodisch abgeschiedenen Elektrotauchlackschichten können lediglich getrocknet oder partiell gehärtet sein. Die betreffenden Elektrotauchlackschichten können dann mit den Füllern, Wasserbasislacken und Klarlacken überschichtet und gemeinsam mit der mit diesen gehärtet werden (erweitertes integriertes Naß-in-naß-Verfahren).

Beispiele geeigneter kathodischer Elektrotauchlacke sowie ggf. von Naß-in-naß-Verfahren unter Einbeziehung von Elektrotauchlackschichten werden in der japanischen Patentanmeldung 1975-142501 (japanische Offenlegungsschrift JP 52-065534 A2, Chemical Abstracts Referat Nr. 87: 137427) oder den Patentschriften US 4,375,498 A1, US 4,537,926 A1, US 4,761,212 A1, EP 0 529 335 A1, DE 41 25 459 A1, EP 0 595 186 A1, EP 0 074 634 A1, EP 0 505 445 A1, DE 42 35 778 A1, EP 0 646 420 A1, EP 0 639 660 A1, EP 0 817 648 A1, DE 195 12 017 C1, EP 0 192 113 A2, DE 41 26 476 A1 oder WO 98/07794 beschrieben.

Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Im Rahmen des erfindungsgemäßen Verfahrens wird die Originallackierung durch ein integriertes Naß-in-naß-Verfahren hergestellt.

Im ersten Verfahrensschritt wird mindestens einer, insbesondere einer, der vorstehend beschriebenen erfindungsgemäß zu verwendenden Zweikomponenten-Füller auf die vorstehend beschriebenen Substrate appliziert.

Methodisch weist die Applikation der Zweikomponenten-Füller keine Besonderheiten auf, sondern kann durch alle üblichen Applikationsmethoden, wie z.B. Spritzen, Rakeln, Streichen, Gießen, Tauchen, Träufeln oder Walzen, erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Dieser Applikationsmethoden können selbstverständlich auch für die Applikation der Wasserbasislacke sowie der Klarlacke verwendet werden.

Im zweiten Verfahrensschritt wird die resultierenden Füllerschicht getrocknet, ohne sie dabei vollständig zu vernetzern. Die Trockung kann durch Wärme unterstützt werden, wobei Temperaturen von 80, vorzugsweise 70 °C nicht überschritten werden sollten. Außerdem kann die Trocknung durch laminare Luftströmungen und/oder durch Reduzierung der Luftfeuchtigkeit beschleunigt werden. Vorzugsweise werden Trocknungszeiten von 30 Sekunden bis zwei Stunden, bevorzugt eine Minute bis eine Stunde und insbesondere eine Minute bis 45 Minuten angewandt.

Im dritten Verfahrenschritt wird die getrocknete Füllerschicht mit mindestens einem, insbesondere einem, Wasserbasislack, überschichtet. Die resultierende Wasserbasislackschicht wird, ohne sie vollständig zu vernetzen, getrocknet, wobei die vorstehend beschriebenen Methoden angewandt werden.

Beispiele geeigneter Wasserbasislacke, die bei dem erfindungsgemäßen Verfahren verwendet werden können, sind aus den Patentschriften und Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299 148 A1, EP 0 394 737 A1, EP 0 590 484 A1, EP 0 234 362 A1, EP 0 234 361 A1, EP 0 543 817 A1, WO 95/14721, EP 0 521 928 A1, EP 0 522 420 A1, EP 0 522 419 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1 oder EP 0 817 684 A1, Spalte 5, Zeilen 31 bis 45, bekannt.

Die getrocknete Wasserbasislackschicht wird im weiteren Verlauf des erfindungsgemäßen Verfahrens mit mindestens einem, insbesondere einem, Klarlack überschichtet, wodurch eine Klarlackschicht resultiert. Beispiele geeigneter Klarlacke werden in den eingangs genannten Patentanmeldungen, insbesondere in der deutschen Patentanmeldung DE 199 14 896 A1, Spalte 17, Zeile 57, bis Spalte 18, Zeile 30, beschrieben. Sofern es sich nicht um Pulverlacke handelt, können die vorstehend beschriebenen Applikationsverfahren angewandt werden. Beispiele geeigneter Applikationsverfahren für Pulverlacke werden beispielsweise in der Produkt-Information der Firma Lacke + Farben AG, "Pulverlacke", 1990, beschrieben.

Anschließend werden die getrocknete Füllerschicht, die Wasserbasislackschicht und die Klarlackschicht sowie gegebenenfalls die Elektrotauchlackschicht gemeinsam thermisch oder thermisch und mit aktinischer Strahlung gehärtet. Hierdurch resultiert die Originallackierung der farb- und/oder effektgebenden Mehrschichtlackierung, die mindestens eine Funktionsschicht, mindestens eine farb- und/oder effektgebende Wasserbasislackierung oder Basislackierung und mindestens eine Klarlackierung umfaßt oder hieraus besteht

Dabei kann die thermische Härtung in üblichen und bekannten Umluftöfen oder mit Hilfe von IR-Lampen erfolgen. Vorzugsweise werden Temperaturen von 80 bis 180, bevorzugt 90 bis 170, besonders bevorzugt 100 bis 165, ganz besonders bevorzugt 110 bis 160 und insbesondere 120 bis 155 °C angewandt. Die Dauer der thermischen Härtung kann eine Minute bis 3 Stunden, bevorzugt 5 Minuten bis 2 Stunden, besonders bevorzugt 10 Minuten bis eine Stunde, ganz besonders bevorzugt 15 Minuten bis eine Stunde und insbesondere 15 bis 45 Minuten betragen.

Für die Bestrahlung mit aktinischer Strahlung kommen Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Im weiteren Verlauf des erfindungsgemäßen Verfahrens wird die vorstehend beschriebene Originallackierung insgesamt oder die in der Originallackierung vorhandenen Schadstellen mit einer Reparaturlackierung überlackiert. Die Reparaturlackierung wird durch ein integriertes Naß-in-naß-Verfahren aufgetragen.

Dabei wird zunächst mindestens ein, insbesondere ein, Wasserbasislack auf die Originallackierung appliziert. Hierbei wird ein Wasserbasislack verwendet, der nach seiner Aushärtung denselben Farbton und/oder denselben Effekt wie die Wasserbasislackierung der Originallackierung hervorzurufen vermag. Vorzugsweise sind die Wasserbasislacke, die für die Herstellung der Reparaturlackierung verwendet werden, stofflich identisch oder nahezu identisch mit den Wasserbasislacken, die für die Herstellung der Originallackierung verwendet wurden. Wie bei der Herstellung der Originallackierung beschrieben, wird die Wasserbasislackschicht getrocknet, ohne sie vollständig zu härten. Hiernach wird die getrocknete Wasserbasislackschicht mit mindestens einem, insbesondere einem, Klarlack überschichtet, wonach die resultierende Klarlackschicht und die Wasserbasislackschicht gemeinsam thermisch oder thermisch und mit aktinischer Strahlung gehärtet werden. Dabei kommen die vorstehend beschriebenen Verfahren und Vorrichtungen zur Anwendung. Es resultiert die Reparaturlackierung der farb- und/oder effektgebenden Mehrschichtlackierung, die die Basislackierung und die Klarlackierung umfaßt oder hieraus besteht.

Die Dicke der nach dem erfindungsgemäßen Verfahren hergestellten Füllerlackierungen liegt vorzugsweise bei 10 bis 100, bevorzugt 10 bis 80, besonders bevorzugt 10 bis 60, ganz besonders bevorzugt 10 bis 40 und insbesondere 10 bis 30 µm.

Die Dicke der nach dem erfindungsgemäßen Verfahren hergestellten Basislackierungen liegt vorzugsweise bei 5 bis 50, bevorzugt 7,5 bis 40, besonders bevorzugt 7,5 bis 30, ganz besonders bevorzugt 7,5 bis 25 und insbesondere 7,5 bis 20 µm.

Die Dicke der nach dem erfindungsgemäßen Verfahren hergestellten Klarlackierungen liegt vorzugsweise bei 10 bis 100, bevorzugt 15 bis 90, besonders bevorzugt 15 bis 80, ganz besonders bevorzugt 20 bis 70, und insbesondere 20 bis 60 µm.

Die mit Hilfe des erfindungsgemäßen Verfahrens hergestellten farb-und/oder effektgebende Mehrschichtlackierungen aus Originallackierung und Autoreparaturlackierung weisen einen hervorragenden Verlauf, eine gleichmäßig glatte Oberfläche, eine hohe Zwischenschichthaftung und hervorragende optische Eigenschaften (Appearance) auf. Obwohl die Reparaturlackierung keine Füllerlackierung oder Funktionsschicht enthält, tritt kein oder nur eine anwendungstechnisch vernachlässigbare Farbtonverschiebung und/oder Effektverschiebung zwischen der Originallackierung und der Reparaturlackierung auf.

### Beispiel und Vergleichsversuche V1 bis V3

### Herstellbeispiel 1

### Die Herstellung einer wäßrige Dispersion, enthaltend ein Polyurethan

Für die Beispiele und die Vergleichsersuche wurde die wäßrige Dispersion eines Polyurethans gemäß der in der deutschen Patentanmeldung DE 44 38 504 A1, Seite 5, Zeilen 24 bis 42, »1. Herstellung von wasserverdünnbaren Polyurethanharzen; 1.1 Polyurethanharz«, angegebenen Vorschrift hergestellt.

### Herstellbeispiel 2

### Die Herstellung einer Bindemittelkomponente (A) zur Verwendung in dem Beispiel und den Vergleichsversuchen V2 und V3

Die Bindemittelkomponente (A) wurde durch Vermischen der folgenden Bestandteile in der angegebenen Reihenfolge und Homogenisieren der resultierenden Mischung hergestellt:
- 30 Gewichtsteile der Polyurethandispersion des Herstellbeispiels 1,
- 0,6 Gewichtsteile eines Verlaufmittels,
- 10 Gewichtsteile deionisiertes Wasser,
- 2,0 Gewichtsteile eines Antischaummittels,
- 0,1 Gewichtsteile N,N-Dimethylethanolamin,
- 5 Gewichtsteile Titandioxid,
- 10 Gewichtsteile Talkum,
- 4,0 Gewichtsteile Blanc Fix (Bariumsulfat-Pigment der Firma Sachtleben),
- 0,2 Gewichtsteile eines pyrogenen Siliziumdioxids (Aerosil ^{®} R 972 der Firma Degussa) und
- 0,5 Gewichtsteile Flammruß 101 (Firma Degussa).

### Herstellbeispiel 3

### Die Herstellung eines Füllers zur Verwendung in den Vergleichsversuchen V2 und V3

Der Füller wurde durch Vermischen von 62,4 Gewichtsteilen der Bindemittelkomponente (A) des Herstellbeispiels 2 und einer Mischung aus
- 32 Gewichtsteilen der Polyurethandispersion des Herstellbeispiels 1,
- 2 Gewichtsteilen eines Aminoplastharzes (Cymel ^{®} 327 der Firma Cytec),
- 2,0 Gewichtsteilen Butyldiglykol und
- 1,6 Gewichtsteilen deionisiertem Wasser
und Homogenisieren der resultierenden Mischung hergestellt.

### Herstellbeispiel 4

### Die Herstellung eines Zweikomponenten-Füllers zur Verwendung in dem Beispiel

Der erfindungsgemäß zu verwendende Zweikomponenten-Füller wurde durch Vermischen von
- 62,4 Gewichtsteilen der Bindemittelkomponente (A) gemäß Herstellbeispiel 2,
- 32 Gewichtsteilen der Polyurethandispersion des Herstellbeispiels 1,
- 2 Gewichtsteilen Butyldiglykol und
- 1,6 Gewichtsteilen deionisiertem Wasser sowie
- 10 Gewichtsteilen einer Vernetzungsmittelkomponente (B) aus einem handelsüblichen Oligomeren von Hexamethylendiisocyanat vom lsocyanurattyp (Desmodur ^{®} N 3600 der Firma Bayer AG) und Butyldiglykolacetat im Gewichtsverhältnis 67 : 33
hergestellt. Zur Applikation wurde der Zweikomponenten-Füller mit deionisiertem Wasser auf eine Verarbeitungsviskosität von 30 Sekunden im DIN4-Becher eingestellt.

### Herstellbeispiel 5

### Die Herstellung eines Einbrennfüllers zur Verwendung im Vergleichsversuch V1

Der Einbrennfüller wurde gemäß Beispiel 5, Seite 12, Zeilen 42 bis 53, des deutschen Patents DE 199 30 555 C1 hergestellt.

### Vergleichsversuch V1

### Die Reparatur einer farb- und effektgebenden Mehrschichtlackierung, enthaltend einen eingebrannten Füller gemäß Herstellbeispiel 5

Der Einbrennfüller des Herstellbeispiels 5 wurde auf Stahltafeln, die mit einem üblichen und bekannten, kathodisch abgeschiedenen und eingebrannten Elektrotauchlack beschichtet waren, in einer Naßschichtdicke appliziert, daß nach dem Einbrennen bei 155 °C während 30 Minuten eine Füllerlackierung einer Schichtdicke von 35 µm resultierte.

Die Füllerlackierung wurde mit einem handelsüblichen Metallic-Wasserbasislack und einem handelsüblichen Zweikomponenten-Klarlack nach dem Naß-in-naß-Verfahren beschichtet. Die Wasserbasislackschicht und die Klarlackschicht wurden gemeinsam während 30 Minuten bei 130 °C eingebrannt. Es resultierte eine Originallackierung, die aus einer Wasserbasisfackierung einer Trockenschichtdicke von 15 µm und einer Klarlackierung einer Trockenschichtdicke von 35 µm bestand.

Zur Simulation einer Reparaturlackierung wurden die beschichteten Oberflächen der Stahltafeln zur Hälfte erneut mit dem handelsüblichen Metallic-Wasserbasislack und dem handelsüblichen Zweikomponenten-Klarlack, wie vorstehend beschrieben, nach dem Naß-in-naß-Verfahren beschichtet, so daß die Reparaturlackierung mit einer Wasserbasislackierung einer Trockenschichtdicke von 15 µm und einer Klarlackierung einer Trockenschichtdicke von 35 µm resultierte.

Der farbmetrische Vergleich zwischen der Originallackierung und der Reparaturlackierung ergab keine Farbtonverschiebung.

### Vergleichsversuch V2

### Die Reparatur einer farb- und effektgebenden Mehrschichtlackierung, enthaltend einen Füller gemäß Herstellbeispiel 3

Der Füller des Herstellbeispiels 3 wurde auf Stahltafeln, die mit einem üblichen und bekannten, kathodisch abgeschiedenen und eingebrannten Elektrotauchlack beschichtet waren, appliziert. Die resultierende Füllerschicht wurde während 5 Minuten bei Raumtemperatur abgelüftet und während 5 Minuten bei 70 °C getrocknet. Die getrocknete Füllerschicht wurde mit einem handelsüblichen Metallic-Wasserbasislack und einem handelsüblichen Zweikomponenten-Klarlack nach dem Naß-in-naß-Verfahren beschichtet. Die Füllerschicht, die Metallic-Wasserbasislackschicht und die Zweikomponenten-Klarlackschicht wurden gemeinsam während 30 Minuten bei 130°C eingebrannt (vgl. auch Seite 5, Zeilen 11 bis 22, des europäischen Patents EP 0 788 523 B1) . Es resultierte eine Originallackierung, die aus einer Funktionsschicht einer Trockenschichtdicke von 15 µm, einer Wasserbasislackierung einer Trockenschichtdicke von 15 µm und einer Klarlackierung einer Trockenschichtdicke von 35 µm bestand.

Zur Simulation einer Reparaturlackierung wurden die beschichteten Oberflächen der Stahltafeln zur Hälfte erneut mit dem handelsüblichen Metallic-Wasserbasislack und dem handelsüblichen Zweikomponenten-Klarlack, wie vorstehend beschrieben, nach dem Naß-in-naß-Verfahren beschichtet, so daß die Reparaturlackierung mit einer Wasserbasislackierung einer Trockenschichtdicke von 15 µm und einer Klarlackierung einer Trockenschichtdicke von 35 µm resultierte.

Der farbmetrische Vergleich zwischen der Originallackierung und der Reparaturlackierung ergab eine Farbtonverschiebung ΔE von 2,0.

### Vergleichsversuch V3

### Die Reparatur einer farb- und effektgebenden Mehrschichtlackierung, enthaltend Füller gemäß Herstellbeispiel 3

Der Füller des Herstellbeispiels 3 wurde auf Stahltafeln, die mit einem üblichen und bekannten, kathodisch abgeschiedenen und eingebrannten Elektrotauchlack beschichtet waren, appliziert. Die resultierende Füllerschicht wurde während 5 Minuten bei Raumtemperatur abgelüftet und während 5 Minuten bei 70 °C getrocknet. Die getrocknete Füllerschicht wurde mit einem handelsüblichen Metallic-Wasserbasislack und einem handelsüblichen Zweikomponenten-Klarlack nach dem Naß-in-naß-Verfahren beschichtet. Die Füllerschicht, die Metallic-Wasserbasislackschicht und die Zweikomponenten-Klarlackschicht wurden gemeinsam während 30 Minuten bei 130 °C eingebrannt (vgl. auch Seite 5, Zeilen 11 bis 22, des europäischen Patents EP 0 788 523 B1). Es resultierte eine Originallackierung, die aus einer Funktionsschicht einer Trockenschichtdicke von 15 µm, einer Wasserbasislackierung einer Trockenschichtdicke von 15 µm und einer Klarlackierung einer Trockenschichtdicke von 35 µm bestand.

Zur Simulation einer Reparaturlackierung wurden die beschichteten Oberflächen der Stahltafeln zur Hälfte erneut mit dem vorstehend beschriebenen Aufbau nach dem Naß-in-naß-Verfahren beschichtet, so daß die Reparaturlackierung mit einer Funktionsschicht einer Trockenschichtdicke von 15 µm, einer Wasserbasislackierung einer Trockenschichtdicke von 15 µm und einer Klarlackierung einer Trockenschichtdicke von 35 µm resultierte.

Der farbmetrische Vergleich zwischen der Originallackierung und der Reparaturlackierung ergab keine Farbtonverschiebung.

### Beispiel

### Die Reparatur einer farb- und/oder effektgebenden Mehrschichtlackierung nach dem erfindungsgemäßen Verfahren

Der Füller des Herstellbeispiels 4 wurde auf Stahltafeln, die mit einem üblichen und bekannten, kathodisch abgeschiedenen und eingebrannten Elektrotauchlack beschichtet waren, appliziert. Die resultierende Füllerschicht wurde während 5 Minuten bei Raumtemperatur abgelüftet und während 5 Minuten bei 70 °C getrocknet. Die getrocknete Füllerschicht wurde mit dem handelsüblichen Metallic-Wasserbasislack und dem handelsüblichen Zweikomponenten-Klarlack nach dem Naß-in-naß-Verfahren beschichtet. Die Füllerschicht, die Metallic-Wasserbasislackschicht und die Zweikomponenten-Klarlackschicht wurden gemeinsam während 30 Minuten bei 130°C eingebrannt. Es resultierte eine Originallackierung, die aus einer Funktionsschicht einer Trockenschichtdicke von 15 µm, einer Wasserbasislackierung einer Trockenschichtdicke von 15 µm und einer Klarlackierung einer Trockenschichtdicke von 35 µm bestand.

Zur Simulation einer Reparaturlackierung wurden die beschichteten Oberflächen der Stahltafeln zur Hälfte erneut mit dem handelsüblichen Metallic-Wasserbasislack und dem handelsüblichen Zweikomponenten-Klarlack, wie vorstehend beschrieben, nach dem Naß-in-naß-Verfahren beschichtet, so daß die Reparaturlackierung mit einer Wasserbasislackierung einer Trockenschichtdicke von 15 µm und einer Klarlackierung einer Trockenschichtdicke von 35 µm resultierte.

Der farbmetrische Vergleich zwischen der Originallackierung und der Reparaturlackierung ergab eine Farbtonverschiebung ΔE von nur 0,5.

## Patentansprüche

1. Verwendung eines wäßrigen Zwei- oder Mehrkomponentensystems; enthaltend
(A) mindestens eine Bindemittelkomponente, enthaltend mindestens ein gesättigtes, ungesättigtes und/oder mit olefinisch ungesättigten Verbindungen gepfropftes, ionisch und/oder nichtionisch stabilisiertes Polyurethan, und
(B) mindestens eine Vernetzungsmittelkomponente, enthaltend mindestens ein Polyisocyanat,
zur Verhinderung von Farbtonverschiebungen und/oder Effektverschiebungen zwischen der Basislackierung einer Originallackierung und der Basislackierung einer Reparaturlackierung bei der Reparatur einer farb- und/oder effektgebenden Mehrschichtlackierung, **dadurch gekennzeichnet, daß** das Zwei- oder Mehrkomponentensystem zur Herstellung der Füllerlackierung oder Funktionsschicht der Originallackierung der farb- und/oder effektgebenden Mehrschichtlackierung verwendet wird.

2. Verwendung nach Anspruch 1, **dadurch gekennzeichnet, daß** die Originallackierung der farb- und/oder effektgebenden Mehrschichtlackierung mindestens eine Füllerlackierung oder Funktionsschicht, mindestens eine farb- und/oder effektgebende Wasserbasislackierung und mindestens eine Klarlackierung umfaßt.

3. Verwendung nach Anspruch 2, **dadurch gekennzeichnet, daß** die Originallackierung der farb- und/oder effektgebenden Mehrschichtlackierung mindestens eine Grundierung umfaßt.

4. Verwendung nach Anspruch 3, **dadurch gekennzeichnet, daß** als, Grundierung mindestens eine kathodisch abgeschiedene Elektrotauchlackierung verwendet wird.

5. Verwendung nach einem der Ansprüche 1 bis 4, **dadurch gekennzeichnet, daß** die Reparaturlackierung der farb- und/oder effektgebenden Mehrschichtlacklerung aus mindestens einer farb-und/oder effektgebenden Wasserbasislackierung und mindestens einer Klarlackierung besteht.

6. Integriertes Verfahren zur Reparatur einer farb- und/oder effektgebenden Mehrschichtlackierung, bei dem
1. die Originallackierung durch ein integriertes Naß-in-naß-Verfahren, bei dem man
1.1 mindestens einen wäßrigen Füller auf ein grundiertes oder ungrundiertes Substrat appliziert,
1.2 die resultierende(n) wäßrige(n) Füllerschicht(en) 1.1 trocknet,
1.3 die getrocknete(n) Füllerschicht(en) 1.2 mit mindestens einem Wasserbasislack überschichtet,
1.4 die resultierende(n) Wasserbasislackschicht(en) 1.3, ohne sie vollständig zu härten, trocknet und
1.5 die getrocknete(n) Wasserbasislackschicht(en) 1.4 mit mindestens einem Klarlack überschichtet, wonach man
1.6 die resultierende(n) Klarlackschicht(en) 1.5 sowie die Schichten 1.2 und 1.4 gemeinsam thermisch oder thermisch und mit aktinischer Strahlung härtet, wodurch die Funktionsschicht oder Füllerlackierung, die Basislackierung und die Klarlackierung der Originallackierung resultieren;
und
2. die Reparaturlackierung durch ein integriertes Naß-in-naß-Verfahren, bei dem man
2.1 mindestens einen Wasserbasislack auf die Originallackierung appliziert,
2.2 die Wasserbasislackschicht(en), ohne sie vollständig zu härten, trocknet,
2.3 die getrocknete(n) Wasserbasislackschicht(en) 2.2 mit mindestens einem Klarlack überschichtet und
2.4 die resultierenden Klarlackschicht(en) 2.3 und die Wasserbasislackschicht(en) 2.2 gemeinsam thermisch oder thermisch und mit aktinischer Strahlung härtet, wodurch die Klalackierung und die Basislackierung der Reparaturlackierungen resultieren;
hergestellt werden, **dadurch gekennzeichnet, daß** man mindestens einen wäßrigen Füller 1.1, enthaltend
(A) mindestens eine Bindemittelkomponente, enthaltend mindestens ein gesättigtes, ungesättigtes und/oder mit Olefinisch ungesättigten Verbindungen gepfropftes, ionisch und/oder nichtionisch stabilisiertes Polyurethan, und
(B) mindestens eine Vernetzungsmittelkomponente, enthaltend mindestens ein Polyisocyanat,
verwendet.

7. Verfahren nach Anspruch 6, **dadurch gekennzeichnet, daß** das Substrat elektrisch leitfähig ist.

8. Verfahren nach Anspruch 7, **dadurch gekennzeichnet, daß** das Substrat grundiert wird, indem man das Substrat als Kathode schaltet, mindestens einen kathodisch abscheidbaren Elektrotauchlack hierauf appliziert und die resultierende Elektrotauchlackschicht(en) für sich alleine oder im Rahmen des integrierten Verfahrens gemeinsam mit den Schichten 1.2, 1.4 und 1.5 härtet.

9. Verfahren nach einem der Ansprüche 6 bis 8, **dadurch gekennzeichnet, daß** man als aktinische Strahlung elektromagnetische Strahlung und/oder Korpuskularstrahlung verwendet.

10. Verfahren nach Anspruch 9, **dadurch gekennzeichnet, daß** man als elektromagnetische Strahlung nahes Infrarot (NIR), sichtbares Licht, UV-Strahlung oder Röntgenstrahlung und als Korpuskularstrahlung Elektronenstrahlung verwendet.

11. Verfahren nach einem der Ansprüche 6 bis 10, **dadurch gekennzeichnet, daß** die Füller 1.1 Pigmente (C) enthalten.

12. Verfahren nach Anspruch 11, **dadurch gekennzeichnet, daß** die Pigmente (C) aus der Gruppe, bestehend aus farb- und/oder effektgebenden, fluoreszierenden, elektrisch leitfähigen und magnetisch abschirmende Pigmenten, Metallpulvern, organischen und anorganischen, transparenten und opaken Füllstoffen und Nanopartikeln ausgewählt werden.

13. Verfahren nach einem der Ansprüche 6 bis 12, **dadurch gekennzeichnet, daß** als Substrate Fahrzeugkarosserien oder Teile hiervon verwendet werden.

## Claims

1. Use of an aqueous two-component or multicomponent system comprising
(A) at least one binder component comprising at least one ionically and/or nonionically stabilized polyurethane which is saturated, unsaturated and/or grafted with olefinically unsaturated compounds, and
(B) at least one crosslinking component comprising at least one polyisocyanate,
to prevent shade shifts and/or effect shifts between the basecoat of an original finish and the basecoat of a refinish in the refinishing of a multicoat color and/or effect coating system, **characterized in that** the two-component or multicomponent system is used to produce the primer-surfacer coat or functional coat of the original finish of the multicoat color and/or effect coating system.

2. Use according to Claim 1, **characterized in that** the original finish of the multicoat color and/or effect coating system comprises at least one primer-surfacer coat or functional coat, at least one color and/or effect aqueous basecoat, and at least one clearcoat.

3. Use according to Claim 2, **characterized in that** the original finish of the multicoat color and/or effect coating system comprises at least one primer coat.

4. Use according to Claim 3, **characterized in that** at least one cathodically deposited electrodeposition coat is used as the primer coat.

5. Use according to any of Claims 1 to 4, **characterized in that** the refinish of the multicoat color and/or effect coating system consists of at least one color and/or effect aqueous basecoat and at least one clearcoat.

6. Integrated process for refinishing a multicoat color and/or effect coating system, in which
1. the original finish is produced by an integrated wet-on-wet process in which
1.1 at least one aqueous primer-surfacer is applied to a primed or unprimed substrate,
1.2 the resultant aqueous primer-surfacer film(s) 1.1 is (are) dried,
1.3 the dried primer-surfacer film(s) 1.2 is (are) overcoated with at least one aqueous basecoat material,
1.4 the resultant aqueous basecoat film(s) 1.3 is (are) dried without being cured completely, and
1.5 the dried aqueous basecoat film(s) 1.4 is (are) overcoated with at least one clearcoat material, and then
1.6 the resultant clearcoat film(s) 1.5 and also the films 1.2 and 1.4 are cured together, thermally or both thermally and with actinic radiation, to give the functional coat or primer-surfacer coat, the basecoat, and the clearcoat of the original finish;
and
2. the refinish is produced by an integrated wet-on-wet process in which
2.1 at least one aqueous basecoat is applied to the original finish,
2.2 the aqueous basecoat film(s) is (are) dried without being fully cured,
2.3 the dried aqueous basecoat film(s) 2.2 is (are) overcoated with at least one clearcoat material, and
2.4 the resultant clearcoat film(s) 2.3 and the aqueous basecoat film(s) 2.2 are cured together, thermally or both thermally and with actinic radiation, to give the clearcoat and the basecoat of the refinishes;
**characterized in that** use is made of at least one aqueous primer-surfacer 1.1 comprising
(A) at least one binder component comprising at least one ionically and/or nonionically stabilized polyurethane which is saturated, unsaturated and/or grafted with olefinically unsaturated compounds, and
(B) at least one crosslinking component comprising at least one polyisocyanate.

7. Process according to Claim 6, **characterized in that** the substrate is electrically conductive.

8. Process according to Claim 7, **characterized in that** the substrate is primed by connecting it as the cathode, applying thereto at least one cathodically depositable electrocoat material and curing the resultant electrocoat film(s) alone or as part of the integrated process together with the films 1.2, 1.4 and 1.5.

9. Process according to any of Claims 6 to 8, **characterized in that** electromagnetic radiation and/or corpuscular radiation is used as the actinic radiation.

10. Process according to Claim 9, **characterized in that** near infrared (NIR), visible light, UV radiation or X-rays are used as the electromagnetic radiation and electron beams are used as the corpuscular radiation.

11. Process according to any of Claims 6 to 10, **characterized in that** the primer-surfacers 1.1 comprise pigments (C).

12. Process according to Claim 11, **characterized in that** the pigments (C) are selected from the group consisting of color and/or effect pigments, fluorescent pigments, electrically conductive pigments, and magnetically shielding pigments, metal powders, organic and inorganic, transparent and opaque fillers, and nanoparticles.

13. Process according to any of Claims 6 to 12, **characterized in that** vehicle bodies or parts thereof are used as substrates.

## Revendications

1. Utilisation d'un système aqueux bi- ou multicomposant, contenant
(A) au moins un composant liant contenant au moins un polyuréthanne saturé, insaturé et/ou greffé avec des composés à insaturation oléfinique, stabilisé par voie ionique et/ou non ionique, et
(B) au moins un composant agent de réticulation contenant au moins un polyisocyanate,
pour empêcher des virages de nuance et/ou des variations d'effet entre le revêtement de peinture de fond d'un revêtement de peinture d'origine et le revêtement de peinture de fond d'un revêtement de peinture de réparation dans la réparation d'un revêtement de peinture multicouche colorant et/ou à effet, **caractérisée en ce que** le système bi- ou multicomposant est utilisé pour la production du revêtement de peinture de garnissage ou de la couche fonctionnelle du revêtement de peinture d'origine du revêtement de peinture multicouche colorant et/ou à effet.

2. Utilisation selon la revendication 1, **caractérisée en ce que** le revêtement de peinture d'origine du revêtement de peinture colorant multicouche et/ou à effet comprend au moins un revêtement de peinture de garnissage ou une couche fonctionnelle, au moins un revêtement de peinture de fond à l'eau, colorant et/ou à effet, et au moins un revêtement de vernis.

3. Utilisation selon la revendication 2, **caractérisée en ce que** le revêtement de peinture d'origine du revêtement de peinture multicouche colorant et/ou à effet comprend au moins un primaire.

4. Utilisation selon la revendication 3, **caractérisée en ce qu'**on utilise comme primaire au moins un revêtement de peinture pour électrodéposition déposé par dépôt cathodique.

5. Utilisation selon l'une quelconque des revendications 1 à 4, **caractérisée en ce que** le revêtement de peinture de réparation du revêtement de peinture multicouche colorant et/ou à effet consiste en au moins un revêtement de peinture de fond à l'eau colorant et/ou à effet et au moins un revêtement de vernis.

6. Procédé intégré pour la réparation d'un revêtement de peinture multicouche colorant et/ou à effet, dans lequel
1. on produit le revêtement de peinture d'origine par un procédé humide-sur-humide intégré, dans lequel
1.1 on applique au moins un apprêt de garnissage à l'eau sur un subjectile muni ou non d'un primaire,
1.2 on sèche la/les couche(s) d'apprêt de garnissage à l'eau 1.1 résultante(s),
1.3 on recouvre la/les couche(s) d'apprêt de garnissage séchée(s) 1.2 avec au moins une peinture de fond à l'eau,
1.4 on sèche, sans la/les faire durcir totalement, la/les couche(s) de peinture de fond à l'eau 1.3 résultante(s) et
1.5 on recouvre avec au moins un vernis la/les couche(s) de peinture de fond à l'eau 1.4 résultante(s), puis
1.6 la/les couche(s) de vernis 1.5 résultante(s) ainsi que les couches 1.2 et 1.4 sont durcies ensemble thermiquement ou thermiquement et par un rayonnement actinique, de sorte qu'il en résulte la couche fonctionnelle ou le revêtement d'apprêt de garnissage, le revêtement de peinture de fond et le revêtement de vernis du revêtement de peinture d'origine ;
et
2. on produit le revêtement de peinture de réparation par un procédé humide-sur-humide intégré, dans lequel
2.1 on applique au moins une peinture de fond à l'eau sur le revêtement de peinture d'origine,
2.2 on sèche la/les couche(s) de peinture de fond à l'eau, sans la/les faire durcir complètement,
2.3 on recouvre avec au moins un vernis la/les couche(s) de peinture de fond à l'eau séchée(s) 2.2 et
2.4 la/les couche(s) de vernis 2.3 résultante(s) et la/les couche(s) de peinture de fond à l'eau 2.2 sont durcies ensemble thermiquement ou thermiquement et par un rayonnement actinique, de sorte qu'il en résulte le revêtement de vernis et le revêtement de peinture de fond des revêtements de peinture de réparation ;
**caractérisé en ce qu'**on utilise au moins un apprêt de garnissage à l'eau 1.1 contenant
(A) au moins un composant liant contenant au moins un polyuréthanne saturé, insaturé et/ou greffé avec des composés à insaturation oléfinique, stabilisé par voie ionique et/ou non ionique, et.
(B) au moins un composant agent de réticulation contenant au moins un polyisocyanate.

7. Procédé selon la revendication 6, **caractérisé en ce que** le subjectile est conducteur de l'électricité.

8. Procédé selon la revendication 7, **caractérisé en ce qu'**on munit le subjectile d'un primaire en connectant le subjectile en tant que cathode, en appliquant sur ce dernier une peinture pour électrodéposition apte au dépôt cathodique et en faisant durcir la/les couche(s) de peinture pour électrodéposition résultante(s) seule(s) ou, dans le cadre du procédé intégré, conjointement avec les couches 1.2, 1.4 et 1.5.

9. Procédé selon l'une quelconque des revendications. 6 à 8, **caractérisé en ce qu'**on utilise comme rayonnement actinique un rayonnement électromagnétique et/ou un rayonnement corpusculaire.

10. Procédé selon la revendication 9, **caractérisé en ce qu'**on utilise comme rayonnement électromagnétique l'infrarouge proche (IRP), la lumière visible, le rayonnement UV ou le rayonnement X et comme rayonnement corpusculaire un faisceau d'électrons.

11. Procédé selon l'une quelconque des revendications 6 à 10, **caractérisé en ce que** l'apprêt de garnissage 1.1 contient des pigments (C).

12. Procédé selon la revendication 11, **caractérisé en ce que** les pigments (C) sont choisis dans le groupe constitué par des pigments colorants et/ou à effet, fluorescents, conducteurs de l'électricité et antimagnétiques, des poudres métalliques, des charges organiques ou inorganiques, transparentes ou opaques et des nanoparticules.

13. Procédé selon l'une quelconque des revendications 6 à 12, **caractérisé en ce qu'**on utilise comme subjectiles des carrosseries d'automobiles ou des pièces de celles-ci.
